# EUROPÄISCHE PATENTSCHRIFT

(11) **EP 2 221 595 B1**
(45) Veröffentlichungstag und Bekanntmachung des Hinweises auf die Patenterteilung: **20.11.2019**
(21) Anmeldenummer: 10153073.1
(22) Anmeldetag: 09.02.2010
(51) Int. Cl.: G01L 19/00, F16L 37/14, F16L 37/12, F16L 41/00

(54) **Verbindungselement für Kapillarrohr**
Connection element for capillary tube
Elément de connexion pour tuyau capillaire

(30) Priorität: 23.02.2009 DE 202009002485 U
(43) Veröffentlichungstag der Anmeldung: 25.08.2010
(73) Patentinhaber: WIKA Alexander Wiegand SE & Co. KG, 63911 Klingenberg/Main (DE)
(72) Erfinder: Geske, Sandra, 63911, Klingenberg/Main (DE); Di Marco, Mirko, 63911, Klingenberg/Main (DE)
(74) Vertreter: TBK

(56) Entgegenhaltungen:
- WO-A2-03/021218
- DE-A1-102007 058 597
- DE-U1- 8 814 730
- DE-U1-202004 020 093

## Beschreibung

Die Erfindung betrifft eine Verbindung zwischen einem Druckmessgerät und einer Heizungsanlage. Eine Heizungsanlage in Gebäuden ist üblicherweise eine Warmwasserheizung mit einem Wasserkreis, dessen Druck für eine ordnungsgemäße Funktion der Heizung in einem vorbestimmen Bereich liegen muss.

Diese Heizungsanlagen haben auch ein Steuergerät mit einem zweckmäßigerweise an gut erreichbarer Stelle daran vorgesehenen Bedienfeld. Dort sollte zweckmäßigerweise auch die Anzeige des Druckwerts erfolgen, damit Fehlbedienungen und Wartungsfehler durch die verbesserte Übersichtlichkeit von vorne herein vermieden werden können.

Die Heizungsrohre, in denen der Wasserkreislauf erfolgt, liegen jedoch üblicherweise nicht dort, wo das Bedienfeld vorgesehen ist. Für die Druckmessung ist ein Anschluss eines Druckmessgeräts, dies kann auch ein Fühler sein, an ein druckführendes Rohr erforderlich. Wird ein vom Ort der Anzeige unabhängiger Messfühler verwendet, muss das Messsignal auf eine Auswerte-/Anzeigeeinheit im Bedienfeld übertragen werden; die geschieht in der Regel elektrisch. Eine solche Lösung benötigt jedoch stets Strom für den Betrieb und kann ausfallen.

Folglich sind rein mechanisch arbeitende Systeme bevorzugt; diese sind einfach, zuverlässig und preiswert. Soll nun eine solche Anzeige in der Nähe des Bedienfelds erfolgen, wird ein im Bedienfeld angebrachtes Druckmessgerät mit Anzeige mit dem druckführenden Rohr über eine dünne Rohrleitung (Kapillare) verbunden. Eine solche Verbindung mittels einer Kunststoffkapillare ist in der DE 201 00 856 U1 beschrieben. Der Anschluss der Kapillare erfolgt hierbei mit einem Schlauchnippel, dem ein Klemmring zugeordnet ist, der die über einen umlaufenden, kegelstumpfförmigen Haltevorsprung des Schlauchnippels gestülpte Kapillare zwischen sich und dem Haltevorsprung einklemmt.

Bei dieser Lösung sind jedoch nur Kapillaren aus einem Material mit einer Mindestelastizität verwendbar, um die Kapillare zerstörungsfrei über den Haltevorsprung stülpen zu können. Diese Elastizität hat andererseits den Nachteil, dass die Kapillare unter schwankendem Druck an der Klemmstelle arbeitet und so aus der Klemmung wandern kann oder von der Klemmung zerstört (zerschnitten) werden kann. Im Übrigen kann auch die Elastizität der Kapillare die Druckmessung selbst durch Dehnung beeinflussen.

Es sind auch Kapillaren aus Metall gebräuchlich, diese haben aber beispielsweise hinsichtlich Einbauradien, Knickfestigkeit, Verstopfungsneigung, Korrosionsfestigkeit etc. Nachteile, die mit modernen Kunststoffen überwunden werden können.

Während Löten an eine Metallverschraubung bei Metallkapillaren die übliche Vorgehensweise ist, um den Anschluss der Kapillare an die Heizungsanlage bzw. das Druckmessgerät zu bewerkstelligen, ist diese Lösung bei Kunststoffkapillaren nicht anwendbar.

Ferner ist ein Verbindungselement gemäß Oberbegriff von Anspruch 1 aus WO 03/021218 A2 bekannt.

Es ist Aufgabe der Erfindung, eine einfach anzubringende und zuverlässige Lösung zum Anschluss von Kunststoffkapillaren, die beispielsweise als extrudierte Kunststoffrohre aus geeigneten Kunststoffen gefertigt sind, an eine Heizungsanlage bzw. an ein Druckmessgerät vorzuschlagen.

Die Aufgabe wird mit einem Verbindungselement mit den Merkmalen des Anspruchs 1 und mit einem Verbindungssystem mit den Merkmalen von Anspruch 13 gelöst.

Vorteilhafte Ausgestaltungen sind in den Unteransprüchen aufgezeigt.

Erfindungsgemäß ist ein Verbindungselement vorgeschlagen, das zum druckdichten Anschluss eines extrudierten Kunststoffrohrs, das zur Übertragung eines Systemdrucks von einer Heizungsanlage an ein Druckmessgerät eingesetzt wird, an die Heizungsanlage bzw. an das Druckmessgerät dient. Das Verbindungselement besteht aus Kunststoff und ist spritzgießtechnisch hergestellt. Diese Bezeichnung umfasst, dass Thermoplaste im geschmolzenen Zustand und in der Regel unter hohem Druck in Formen (Werkzeuge) gespritzt werden und dort durch Abkühlung fest werden. Alternativ sind auch andere Verfahren, insbesondere Gießen chemisch/thermisch oder durch Licht härtender Kunststoffe in geeignete Formen oder andere Kunststoffformverfahren anwendbar und von diesem Ausdruck erfasst.

Das Verbindungselement nimmt das Kunststoffrohr abschnittsweise in sich auf und ist damit fest und dicht verbunden. Die Befestigung kann durch Kleben, Schweißen oder andere geeignete herkömmliche Verfahren erfolgen.

Das Verbindungselement hat mindestens eine Dichtfläche zur dichtenden Anlage mit einem O-Ring angeformt und ist in eine Aufnahme der Heizungsanlage bzw. des Druckmessgeräts einsteckbar.

Durch eine geeignete Gestaltung des Verbindungselements und der Sicherung können diese ohne Verschraubung mit einer Überwurfmutter in der Aufnahme festgelegt werden. Eine solche Gestaltung hat den Vorteil, dass insbesondere, wenn das eine Ende der Kapillare schon an der Heizungsanlage (Rohrleitung, Kessel oder dergleichen) angeschlossen ist, keine Drehbewegungen mehr am anderen, freien Ende beim Anschließvorgang ausgeführt werden müssen und dadurch ein Verdrillen (Tordieren) der Kunststoffrohrleitung oder Kapillare sicher vermieden werden kann. Auf diese Weise sind montagebedingte Beschädigungen nicht mehr zu befürchten. Zudem wird ein übermäßiges Festziehen der Verbindung- üblicherweise im Bestreben eine besonders hohe Dichtigkeit der Verbindung zu erreichen - hier sicher vermieden.

Übermäßiges Anziehen hätte beispielsweise im Fall des eingangs beschriebenen Stands der Technik den Nachteil, dass der Kunststoff der Kapillare durch die Überwurfmutter geradezu abgekniffen würde, was die Verbindung zerstört. In der vorliegenden Erfindung ist die Dichtigkeit durch die Abmessungen der einzelnen Teile vorgegeben und nicht durch Manipulation, weder positiv noch negativ, beeinflussbar. Somit ist die Zuverlässigkeit der Dichtung verbessert.

Das Verbindungselement besteht aus Kunststoff und kann, je nach Einsatzort, beachtlichen Drücken und Temperaturen ausgesetzt sein, wobei dauerhafte Dichtigkeit eine Grundanforderung an die Verbindung ist. Um diese Anforderung sicher zu erfüllen, hat das Verbindungselement eine Durchgangsbohrung, in die mindestens im Bereich der Anlage mit dem O-Ring eine Metallhülse eingesetzt ist, die den zugeordneten Abschnitt des Verbindungselements gegen Kriechen unter Temperatur und/oder Druck stabilisiert.

Um das Verbindungselement festzulegen, kann das Verbindungselement mindestens eine Aussparung haben, mit der es mit der Sicherung in arretierenden Eingriff gelangen kann. Die Aussparung kann ein einfaches Loch sein, es können aber auch einander in Durchmesserrichtung gegenüberliegende Löcher oder Schlitze sein. Die Sicherung kann eine Sicherungsklammer, ein Schnappring, ein Stift oder Splint, eine Spange oder ein ähnliches in die Aussparung(en) einführbares Teil sein. Im Fall der seitlichen Schlitze nimmt die Sicherung dann das Verbindungselement von zwei Seiten zwischen Sicherungsvorsprüngen auf, so dass das Verbindungselement an zwei Seiten gehalten ist und eine schiefe Belastung des Verbindungselements bzw. des O-Rings verhindert ist. Vorzugsweise kann die Verbindung von außen festgelegt werden. Dazu ist die Aussparung seitlich offen, um die Sicherung quer zur Einsteckrichtung des Verbindungselements in die Aufnahme einzuführen, wobei die Sicherung im eingeführten Zustand das Verbindungselement in Einsteckrichtung formschlüssig an der Aufnahme verriegelt.

Zweckmäßig ist es, wenn die Aussparung eine am Umfang des Verbindungselements offene, umlaufende Nut ist, die eine Drehung des verriegelten Verbindungselements relativ zur Sicherung und/oder der Aufnahme erlaubt.

Die Zuverlässigkeit der Verbindung und die Einfachheit ihrer Herstellung können weiter verbessert werden, wenn die Aussparung mit Rastmitteln versehen ist, um mit der Sicherung zu verrasten. Vorzugsweise wird hier eine Gestaltung gewählt, bei der die nachgiebigen Teile einer Rastverbindung an der Sicherung vorgesehen werden, so dass bei erneutem Anschließen des Verbindungselements eine neue Sicherung verwendet werden kann, die die geforderten Haltekräfte des Rasteingriffs bereitstellt. Zudem kann die Gestaltung mit einem Rastmittel vorsehen, dass der Rasteingriff mit einem hörbaren Klickgeräusch erfolgt, so dass der Monteur leicht erkennen kann, ob die Verbindung eingerastet ist.

Die Sicherung kann eine Sicherungsklammer mit zwei Schenkeln zum Eingriff mit dem Verriegelungselement sein, dabei erfasst diese Definition auch eine Gestaltung, in der ein Schenkel der Klammer in ein Loch der Aufnahme bzw. des Verbindungselements eingreift, während der andere Schenkel mit der Außenseite der Aufnahme verriegelt. Dies kann durch einen Rasteingriff oder auch durch entsprechendes Verbiegen des Schenkels bewerkstelligt werden.

Vorzugsweise hat das Verbindungselement an seinem dem Kunststoffrohr abgewandten Ende einen Axialzapfen und einen Schulterabschnitt, wobei der Umfang des Axialzapfens die Dichtfläche für den O-Ring bildet und der Schulterabschnitt den O-Ring axial abstützt. Die andere radiale Dichtfläche für den O-Ring bildet eine entsprechende Innenumfangsfläche der Aufnahme. Weil an diesen Dichtflächen die mechanische Belastung groß ist, ist kann die axiale Länge der Metallhülse so bemessen sein, dass sie den Axialzapfen vollständig durchgreift und über den Schulterabschnitt hinaus in das Innere des Verbindungselements hineinreicht.

Zur Abdichtung in Warmwasserheizungen ist das Verbindungselement vorzugsweise mit einem O-Ring aus EPDM versehen, der vorzugsweise eine Härte von 60 (IRHD) hat. Material und Härte des O-Rings können den Einsatzbedingungen der Verbindung entsprechend angepasst werden.

Zur Verwendung mit handelsüblichen Druckmessgeräten hat das Verbindungselement vorzugsweise folgende Abmessungen:
der größte Außendurchmesser liegt im Bereich von 7mm + 1mm, beträgt also 6 bis 8mm;
der kleinste Außendurchmesser liegt im Bereich von 5mm + 1mm, beträgt also 4 bis 6mm;
der druckführende Innendurchmesser liegt im Bereich von 1,0mm bis 2,5mm + 0,5mm, beträgt also 0,5 bis 3mm.

Der Verbindungsaufbau kann auch als ein Verbindungssystem zur Verbindung eines Druckmessgeräts mit einer Heizungsanlage beschrieben werden, wobei das System die folgenden, oben genauer beschrieben Elemente aufweist:
ein Verbindungselement,
einen O-Ring,
eine Sicherung und
eine Aufnahme, die druckdicht mit dem Druckmessgerät verbunden ist, in die das Verbindungselement einsteckbar ist und die eine mit einer Aussparung des Verbindungselements zur Deckung bringbare Ausnehmung hat, die seitlich offen ist, wobei die Sicherung in die Ausnehmung und die Aussparung einführbar ist und die beiden Elemente in Einsteckrichtung miteinander verriegelt.

Die Erfindung wird nachfolgend anhand eines Ausführungsbeispiels unter Bezugnahme auf die Zeichnung näher erläutert. Es zeigt:
Fig. 1 eine Explosionsdarstellung der Einzelteile des Verbindungselements in seiner Anordnung in einem Verbindungssystem zum Anschluss eines Manometers an eine Kapillare; und
Fig. 2 die Elemente aus Fig. 2 im zusammengebauten Zustand, in dem die Verbindung hergestellt ist.

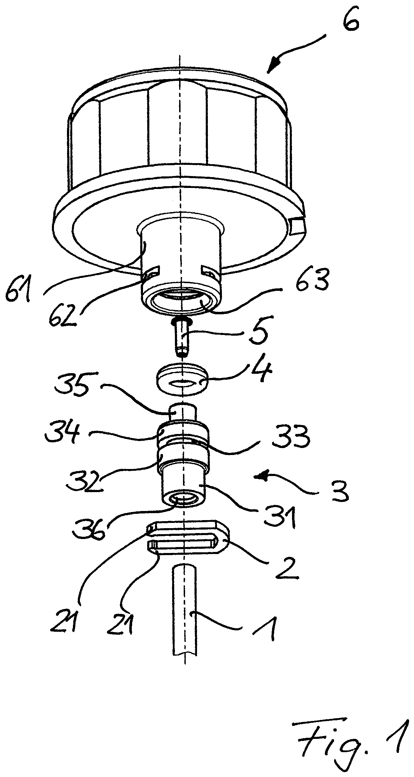

Von unten nach oben zeigt Fig. 1 eine Kapillare 1, eine Sicherung 2, eine Verbindungselement 3, einen O-Ring 4, eine Metallhülse 5 und ein Manometer 6 mit einer Aufnahme 61, die seitliche, schlitzförmige Ausnehmungen 62 an zwei einander gegenüberliegenden Seiten hat.

Die Aufnahme 61 hat eine zentrale Durchgangsbohrung 63, deren Innenumfangswand eine Dichtfläche zum Zusammenwirken mit dem O-Ring 4 ausbildet.

Das Verbindungselement 3 hat ferner eine zentrale, gestufte Durchgangsbohrung 36, deren Innendurchmesser von unten nach oben, d.h. in Richtung auf das Manometer 6, abnimmt. In den Bohrungsabschnitt mit dem größten Durchmesser ist die Kapillare 1 eingesetzt. Zweckmäßigerweise ist die Stufe am Ende dieses Bohrungsdurchmessers gleichzeitig ein Anschlag für die Kapillare 1, die in der Bohrung 36 mittels Schweißen oder Kleben dicht und fest befestigt ist.

Vom anderen Ende der Durchgangsbohrung 36 kommend ist die Metallhülse 5 eingesetzt, so dass sie in der Durchgangsbohrung 36 aufgenommen ist. Ein Kragen oder Bördelrand an einem Ende der Metallhülse 5 verhindert, dass die Metallhülse zu weit in die Bohrung 36 hineingleitet. Eine leicht konische Gestalt am anderen Ende der Metallhülse 5 erleichtert das Einsetzen der Metallhülse 5 in die Durchgangsbohrung 36.

Am Außenumfang des Verbindungselements 3 sind, von unten nach oben in Fig. 1, die folgenden Abschnitte verschiedenen Durchmessers ausgebildet: 31 ist der Befestigungsabschnitt für die Kapillare; 32 ist ein Kragenabschnitt; 33 ist eine Aussparung zur Aufnahme der Schenkel 21 der Sicherung 2; 34 ist eine Halteschulter, die sowohl den O-Ring 4 abstützt als auch das Herausziehen des Verbindungselements 3 aus der Aufnahme 61 mittels der Sicherung 2 verhindert; und 35 ist ein Axialzapfen, auf den der O-Ring 4 aufgesteckt wird, und der die radial innere Dichtfläche zu Abdichtung mit dem O-Ring 4 bereitstellt.

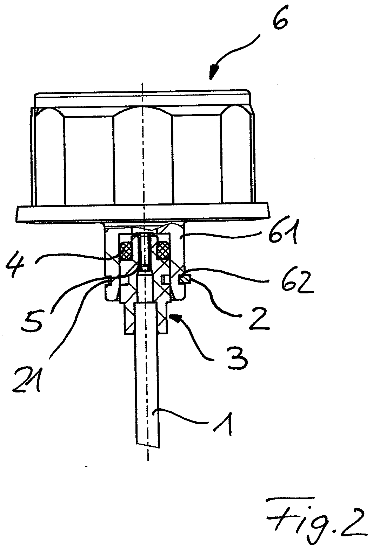

Die zusammengebaute Verbindung ist in Fig. 2 gezeigt. Darin ist das Verbindungselement 3 in die Durchgangsbohrung 63 der Aufnahme 61 eingesetzt und der O-Ring 4 ist nun zwischen der Innenwand der Durchgangsbohrung 63 und dem Axialzapfen 35 eingespannt und dichtet die Verbindung ab.

Die Sicherung 2 ist mit ihren Schenkeln 21 in die schlitzförmigen Ausnehmungen 62 der Aufnahme 61 eingesetzt, so dass die Schenkel 21 in der Aussparung 33 zwischen dem Kragenabschnitts 32 und der Halteschulter 34 aufgenommen sind. Die Sicherung 2 hält das Verbindungselement 3 in der Durchgangsbohrung 63 in axialer Richtung gegen Herausziehen fest, indem sich die Sicherung 2 an der Halteschulter 34 einerseits und an den Seitenwänden der Ausnehmungen 62 andererseits abstützt.

Durch die Gestaltung der der Aussparung 33 im Verbindungselement 3 als umlaufende Nut kann sich das Verbindungselement 3 gegenüber der Aufnahme 61 um seine Längsachse drehen.

Das gezeigte Manometer kann ein herkömmliches Manometer mit einer Analoganzeige sein; es können aber auch Druckmessgeräte anderer Art, z.B. digitale, oder lediglich eine ja/nein-Anzeige verwendet werden.

Die Sicherung 2 hat (hier nicht gezeigt) Haltemittel, die ein versehentliches Entfernen der Sicherung 2 verhindern. Dazu kann auch ein einfacher, über die Sicherung geklebter Aufkleber verwendet werden, der nicht zerstörungsfrei entfernbar ist und somit eine unerwünschte Manipulation der Verbindung anzeigt.

## Patentansprüche

1. Verbindungselement (3) zum druckdichten Anschluss eines extrudierten Kunststoffrohrs (1), das zur Übertragung eines Systemdrucks von einer Heizungsanlage an ein Druckmessgerät (6) eingesetzt wird, an die Heizungsanlage und/oder an das Druckmessgerät, wobei das Verbindungselement (3) das Kunststoffrohr (1) abschnittsweise in sich aufnimmt und damit fest und dicht verbunden ist,
mindestens eine Dichtfläche zur dichtenden Anlage mit einem O-Ring (4) angeformt hat, und
in eine Aufnahme (61) der Heizungsanlage oder des Druckmessgeräts (6) einsteckbar ist und dort mittels einer das Verbindungselement (3) abschnittsweise durchgreifenden Sicherung (2) festlegbar ist, **dadurch gekennzeichnet, dass**
das Verbindungselement (3) aus Kunststoff besteht, und
das Verbindungselement (3) eine Durchgangsbohrung (36) hat, in die mindestens im Bereich der Anlage mit dem O-Ring (4) eine Metallhülse (5) eingesetzt ist, die den zugeordneten Abschnitt (35) des Verbindungselements (3) gegen Kriechen unter Temperatur und/oder Druck stabilisiert.

2. Verbindungselement nach Anspruch 1, **dadurch gekennzeichnet, dass** das Verbindungselement (3) mindestens ein Loch als eine Aussparung zum arretierenden Eingriff mit der Sicherung (2) hat.

3. Verbindungselement nach Anspruch 1, **dadurch gekennzeichnet, dass** das Verbindungselement (3) zwei in Durchmesserrichtung einander gegenüberliegende, seitlich offene Aussparungen hat, in die die Sicherung (2) quer zur Einsteckrichtung einführbar ist, wobei die Sicherung (2) das Verbindungselement (3) formschlüssig und an zwei Seiten an der Aufnahme (61) verriegelt.

4. Verbindungselement nach Anspruch 1, **dadurch gekennzeichnet, dass** das Verbindungselement (3) als die Aussparung eine am Umfang des Verbindungselements (3) offene umlaufende Nut (33) hat, die eine Drehung des verriegelten Verbindungselements (3) relativ zur Sicherung (2) und/oder der Aufnahme (61) erlaubt.

5. Verbindungselement nach Anspruch 2, 3 oder 4, **dadurch gekennzeichnet, dass** die Aussparung (33) mit Rastmitteln versehen ist, um mit der Sicherung (2) zu verrasten.

6. Verbindungselement nach einem oder mehreren der Ansprüche 3 bis 5, **dadurch gekennzeichnet, dass** die Sicherung (2) eine Sicherungsklammer mit zwei Schenkeln (21) zum Eingriff mit dem Verbindungselement (3) ist.

7. Verbindungselement nach Anspruch 1, **dadurch gekennzeichnet, dass** das Verbindungselement (3) an seinem dem Kunststoffrohr (1) abgewandten Ende einen Axialzapfen (35) und einen Schulterabschnitt (34) hat, wobei der Umfang des Axialzapfens (35) die Dichtfläche für den O-Ring bildet und der Schulterabschnitt (34) den O-Ring axial abstützt.

8. Verbindungselement nach Anspruch 7, **dadurch gekennzeichnet, dass** die axiale Länge der Metallhülse (5) so bemessen ist, dass sie den Axialzapfen (35) vollständig durchgreift und über den Schulterabschnitt (34) hinaus in das Innere des Verbindungselements (3) hineinreicht.

9. Verbindungselement nach einem oder mehreren der Ansprüche 1 bis 6, **dadurch gekennzeichnet, dass** das Verbindungselement (3) mit einem O-Ring (4) aus EPDM versehen ist.

10. Verbindungselement nach Anspruch 9, **dadurch gekennzeichnet, dass** der O-Ring (4) eine Härte von 60 IRHD hat.

11. Verbindungselement nach einem oder mehreren der vorhergehenden Ansprüche, **dadurch gekennzeichnet, dass** der größte Außendurchmesser im Bereich von 7mm + 1mm liegt, und der kleinste Außendurchmesser im Bereich von 5mm ± 1mm liegt.

12. Verbindungselement nach einem oder mehreren der vorhergehenden Ansprüche, **dadurch gekennzeichnet, dass** das Verbindungselement einen druckführenden Innendurchmesser von 1,0mm bis 2,5mm + 0,5mm besitzt.

13. Verbindungssystem zur Verbindung eines Druckmessgeräts mit einer Heizungsanlage, wobei das System die folgenden Elemente aufweist:
ein Verbindungselement (3) nach einem oder mehreren der Ansprüche 1 bis 12,
einen O-Ring (4),
eine Aufnahme (61), die druckdicht mit dem Druckmessgerät (6) verbunden ist, in die das Verbindungselement (3) einsteckbar ist und die eine mit einer Aussparung (33) des Verbindungselements (3) zur Deckung bringbare Ausnehmung (62) hat, die seitlich offen ist, und
eine Sicherung (2), die in einer die Einsteckrichtung des Verbindungselements (3) in die Aufnahme (61) kreuzenden Richtung in die Ausnehmung (62) und die Aussparung (33) einführbar ist und die beiden Elemente in Einsteckrichtung miteinander verriegelt.

## Claims

1. Connecting element (3) for joining an extruded plastics tube (1), which is used to transfer a system pressure from a heating installation to a pressure measuring device (6), to the heating installation and/or to the pressure measuring device in a pressure-tight manner, wherein the connecting element (3) partially accommodates the plastics tube (1) and is thus connected in a firm and tight manner,
has at least one integrally formed sealing surface for contacting an O-ring (4) in a sealing manner, and
is able to be plugged into a receptacle (61) of the heating installation or of the pressure measuring device (6) and is able to be fixed there by means of a securing means (2) that partially engages through the connecting element (3), **characterized in that**
the connecting element (3) consists of plastics, and
the connecting element (3) has a through-bore (36), into which a metal sleeve (5) has been inserted at least in the region of the contact with the O-ring (4), said metal sleeve (5) stabilizing the associated portion (35) of the connecting element (3) against creep under temperature and/or pressure.

2. Connecting element according to Claim 1, **characterized in that** the connecting element (3) has at least one hole as a cutout for locking engagement with the securing means (2).

3. Connecting element according to Claim 1, **characterized in that** the connecting element (3) has two laterally open cutouts which are located opposite one another in the diametric direction and into which the securing means (2) is introducible transversely to the plug-in direction, wherein the securing means (2) locks the connecting element (3) in a form-fitting manner and on two sides of the receptacle (61).

4. Connecting element according to Claim 1, **characterized in that** the connecting element (3) has, as the cutout, an open encircling groove (33) at the circumference of the connecting element (3), said groove (33) allowing the locked connecting element (3) to rotate relative to the securing means (2) and/or to the receptacle (61).

5. Connecting element according to Claim 2, 3 or 4, **characterized in that** the cutout (33) is provided with latching means for catching with the securing means (2).

6. Connecting element according to one or more of Claims 3 to 5, **characterized in that** the securing means (2) is a securing clip having two legs (21) for engaging with the connecting element (3).

7. Connecting element according to Claim 1, **characterized in that** the connecting element (3) has, at its end remote from the plastics tube (1), an axial peg (35) and a shoulder portion (34), wherein the circumference of the axial peg (35) forms the sealing surface for the O-ring and the shoulder portion (34) axially supports the O-ring.

8. Connecting element according to Claim 7, **characterized in that** the axial length of the metal sleeve (5) is such that it engages entirely through the axial peg (35) and extends beyond the shoulder portion (34) into the interior of the connecting element (3).

9. Connecting element according to one or more of Claims 1 to 6, **characterized in that** the connecting element (3) is provided with an O-ring (4) made of EPDM.

10. Connecting element according to Claim 9, **characterized in that** the O-ring (4) has a hardness of 60 IRHD.

11. Connecting element according to one or more of the preceding claims, **characterized in that** the largest outside diameter is in the region of 7 mm ± 1 mm, and the smallest outside diameter is in the range of 5 mm ± 1 mm.

12. Connecting element according to one or more of the preceding claims, **characterized in that** the connecting element has a pressure-carrying inside diameter of 1.0 mm to 2.5 mm ± 0.5 mm.

13. Connecting system for connecting a pressure measuring device to a heating installation, wherein the system has the following elements:
a connecting element (3) according to one or more of Claims 1 to 12,
an O-ring (4),
a receptacle (61) which is connected to the pressure measuring device (6) in a pressure-tight manner and into which the connecting element (3) is able to be plugged, and which has a recess (62) that is able to be aligned with a cutout (33) in the connecting element (3) and is laterally open, and
a securing means (2), which is introducible into the recess (62) and the cutout (33) in a direction intersecting the plug-in direction of the connecting element (3) into the receptacle (61) and locks the two elements together in the plug-in direction.

## Revendications

1. Élément de connexion (3) pour le raccordement étanche à la pression d'un tuyau en plastique extrudé (1), qui est utilisé pour transférer une pression de système d'une installation de chauffage à un appareil de mesure de pression (6), à l'installation de chauffage et/ou à l'appareil de mesure de pression, l'élément de connexion (3) recevant en partie en soi le tuyau en plastique (1) et étant connecté fixement et hermétiquement à celui-ci,
présentant au moins une surface d'étanchéité pour l'application hermétique avec un joint torique (4) formé sur celle-ci, et
pouvant être enfiché dans un logement (61) de l'installation de chauffage ou de l'appareil de mesure de pression (6) et pouvant y être fixé au moyen d'une fixation (2) pénétrant en partie à travers l'élément de connexion (3),
**caractérisé en ce que**
l'élément de connexion (3) se compose de plastique, et
l'élément de connexion (3) présente un alésage traversant (36) dans lequel est insérée, au moins dans la région de l'application avec le joint torique (4), une douille métallique (5) qui stabilise la portion associée (35) de l'élément de connexion (3) contre le fluage sous l'effet de la température et/ou de la pression.

2. Élément de connexion selon la revendication 1, **caractérisé en ce que** l'élément de connexion (3) présente au moins un trou en tant qu'évidement pour l'engagement de blocage avec la fixation (2).

3. Élément de connexion selon la revendication 1, **caractérisé en ce que** l'élément de connexion (3) présente deux évidements ouverts latéralement, situés à l'opposé l'un de l'autre dans la direction du diamètre, dans lesquels la fixation (2) peut être introduite transversalement à la direction d'enfichage, la fixation (2) verrouillant l'élément de connexion (3) au logement (61) par engagement par correspondance de formes et au niveau de deux côtés.

4. Élément de connexion selon la revendication 1, **caractérisé en ce que** l'élément de connexion (3) présente, en tant qu'évidement, une rainure (33) périphérique ouverte au niveau de la périphérie de l'élément de connexion (3), qui permet une rotation de l'élément de connexion verrouillé (3) par rapport à la fixation (2) et/ou au logement (61) .

5. Élément de connexion selon la revendication 2, 3 ou 4, **caractérisé en ce que** l'évidement (33) est pourvu de moyens d'encliquetage afin de s'encliqueter avec la fixation (2).

6. Élément de connexion selon l'une quelconque ou plusieurs des revendications 3 à 5, **caractérisé en ce que** la fixation (2) est une pince de fixation avec deux branches (21) pour l'engagement avec l'élément de connexion (3).

7. Élément de connexion selon la revendication 1, **caractérisé en ce que** l'élément de connexion (3) présente, au niveau de son extrémité opposée au tuyau en plastique (1), un tourillon axial (35) et une portion d'épaulement (34), la périphérie du tourillon axial (35) formant la surface d'étanchéité pour le joint torique et la portion d'épaulement (34) supportant axialement le joint torique.

8. Élément de connexion selon la revendication 7, **caractérisé en ce que** la longueur axiale de la douille métallique (5) est dimensionnée de telle sorte qu'elle vienne en prise complètement à travers le tourillon axial (35) et pénètre au-delà de la portion d'épaulement (34) à l'intérieur de l'élément de connexion (3).

9. Élément de connexion selon l'une quelconque ou plusieurs des revendications 1 à 6, **caractérisé en ce que** l'élément de connexion (3) est pourvu d'un joint torique (4) en EPDM.

10. Élément de connexion selon la revendication 9, **caractérisé en ce que** le joint torique (4) présente une dureté de 60 IRHD.

11. Élément de connexion selon l'une quelconque ou plusieurs des revendications précédentes, **caractérisé en ce que** le plus grand diamètre extérieur est de l'ordre de 7 mm +- 1 mm, et le plus petit diamètre extérieur est de l'ordre de 5 mm +- 1 mm.

12. Élément de connexion selon l'une quelconque ou plusieurs des revendications précédentes, **caractérisé en ce que** l'élément de connexion présente un diamètre intérieur conduisant la pression de 1,0 mm à 2,5 mm +- 0,5 mm.

13. Système de connexion pour la connexion d'un appareil de mesure de pression à une installation de chauffage, le système présentant les éléments suivants :
un élément de connexion (3) selon l'une quelconque ou plusieurs des revendications 1 à 12,
un joint torique (4),
un logement (61) qui est connecté de manière étanche à la pression à l'appareil de mesure de pression (6), dans lequel peut être inséré l'élément de connexion (3) et qui présente un orifice (62) pouvant être amené en coïncidence avec un évidement (33) de l'élément de connexion (3), lequel est ouvert latéralement, et
une fixation (2) qui peut être introduite, dans une direction croisant la direction d'enfichage de l'élément de connexion (3) dans le logement (61), dans l'orifice (62) et l'évidement (33), et qui verrouille l'un à l'autre les deux éléments dans la direction d'enfichage.
